# EUROPEAN PATENT SPECIFICATION

(11) **EP 3 961 251 B1**
(45) Date of publication and mention of the grant of the patent: **01.04.2026**
(21) Application number: 19926079.5
(22) Date of filing: 07.05.2019
(51) Int. Cl.: G01S 7/487, G01S 17/95, G01S 17/42, G01S 17/89, G01S 17/48, G01S 7/48

(54) **NOISY POINT IDENTIFICATION METHOD FOR LASER RADAR, AND LASER RADAR SYSTEM**
VERFAHREN ZUR IDENTIFIZIERUNG VON VERRAUSCHTEN PUNKTEN FÜR LASERRADAR UND LASERRADARSYSTEM
PROCÉDÉ D'IDENTIFICATION DE POINT BRUITÉ DESTINÉ À UN RADAR LASER ET SYSTÈME RADAR LASER

(30) Priority: 22.04.2019 CN 201910322910
(43) Date of publication of application: 02.03.2022
(73) Proprietor: Velodyne Lidar USA, Inc., San Jose, CA 95138 (US)
(72) Inventor: ZHOU, Xiaotong, Shanghai 201702 (CN); XIANG, Shaoqing, Shanghai 201702 (CN); ZENG, Zhaoming, Shanghai 201702 (CN); SHAO, Zhenlei, Shanghai 201702 (CN)
(74) Representative: FRKelly
(86) International application number: PCT/CN2019/085765
(87) International publication number: WO 2020/215368

(56) References cited:
- EP-A2- 1 061 336
- CN-A- 105 842 678
- CN-A- 106 845 321
- CN-A- 108 303 690
- US-A1- 2018 284 245
- US-B1- 9 097 800
- CHARRON NICHOLAS ET AL: "De-noising of Lidar Point Clouds Corrupted by Snowfall", 2018 15TH CONFERENCE ON COMPUTER AND ROBOT VISION (CRV), IEEE, 8 May 2018 (2018-05-08), pages 254 - 261, XP033475202, DOI: 10.1109/CRV.2018.00043
- XU, YUANNAN : "Research on Imaging Lidar to Recognize the Local Range of Target Based on Intensity Image", THE ABSTRACT COLLECTION OF PAPERS OF 2006 ACADEMIC CONFERENCE OF THE CHINESE OPTICAL SOCIETY, 31 December 2006 (2006-12-31), CN, pages 593 - 594, XP009531403

## Description

### Field of the Invention

The present disclosure relates to the field of laser radars, and in particular, to a noise point identification method capable of being used for a laser radar and a laser radar system.

### Background of the Invention

Laser radar or LiDAR is a general term for laser active detection sensor devices. Its working principle is roughly as follows: an emitter of the laser radar emits a beam of laser light; after the beam of laser light encounters an object, it is diffusely reflected and returned to a laser receiver; and a radar module multiplies a time interval between emission and reception of a signal by the speed of light, and then divides it by 2 so as to calculate a distance between the emitter and the object. According to the number of beams of laser light, there are usually single-line laser radar, 4-line laser radar, 8/16/32/64-line laser radar, and so on. One or more laser beams are emitted along different angles in a vertical direction and scanned in a horizontal direction to realize the detection of a three-dimensional contour of a target region. A plurality of measurement channels (lines) are equivalent to a plurality of scanning planes with inclination angles. Therefore, the more the beams of laser light in the vertical field of view, the higher the angular resolution in the vertical direction, and the greater the density of the laser point clouds.

Taking a mechanical laser radar as an example, when it performs detection in rainy, snowy or foggy weather, more noise points will be generated, which will affect the quality of the point clouds. For example, in rainy, snowy or foggy weather, there are large and small water droplets with high density in the air. When a laser beam is irradiated onto a water droplet, a reflection echo will be generated and a corresponding point will be formed in a point cloud. Since this type of point is not a point that actually exists on the target detection object, it should be regarded as a noise point.

In addition to the mechanical laser radar as described above, other types of laser radars, such as galvanometer scanning laser radar, rotating mirror scanning laser radar, or pure solid-state laser radar including Flash laser radar and phased array laser radar, will also encounter the noise point problem as described above when performing detection in rainy, snowy or foggy weather.

"De-noising of Lidar Point Clouds Corrupted by Snowfall" CHARRON NICHOLAS ET AL, 15TH CONFERENCE ON COMPUTER AND ROBOT VISION (CRV), IEEE, 8 May 2018, describes a method for removing noise caused by snow, while retaining the detail of environmental features, for autonomous driving.

The content in the section Background of the Invention only discloses the known technologies.

### Summary of the Disclosure

In view of at least one of the defects in the prior art, the present disclosure proposes a noise point identification method capable of being used for a laser radar, comprising:
step S201: receiving a point cloud acquired by the laser radar;
step S202: acquiring at least one of a reflectivity and a continuity parameter of a point in the point cloud, and a distance between the point and the laser radar; and
step S203: judging whether the point is a noise point or not at least according to at least one of the reflectivity and the continuity parameter, and the distance; wherein the step S203 comprises: determining a distance factor and a reflectivity factor, wherein: the distance factor being zero or a first weight and the reflectivity factor being zero or a second weight; when the distance is within a preset distance range, a distance factor being zero, otherwise the distance factor being a first weight; when the reflectivity is less than or equal to a preset reflectivity threshold, a reflectivity factor being zero, otherwise the reflectivity factor being a second weight ; and the first weight and the second weight are dynamically adjusted according to a detected weather state ; calculating a noise point confidence level of the point based on a sum of the distance factor and the reflectivity factor ; and when the noise point confidence level is outside a normal confidence level range, judging that the point is the noise point.

According to an aspect of the present disclosure, the step S202 comprises: acquiring the reflectivity of the point in the point cloud, and the distance between the point and the laser radar, and the step S203 comprises: judging whether the point is the noise point or not according to the reflectivity and the distance.

According to an aspect of the present disclosure, the step S202 comprises: acquiring the continuity parameter of the point in the point cloud, and the distance between the point and the laser radar, and the step S203 comprises: judging whether the point is the noise point or not according to the continuity parameter and the distance.

According to an aspect of the present disclosure, the step S203 comprises: when the distance is within a preset distance range and the reflectivity is less than or equal to a preset reflectivity threshold, judging that the point is the noise point.

According to an aspect of the present disclosure, the noise point identification method further comprises: acquiring noise of the point and the number of echo pulses of the point; and the step S203 comprises: judging whether the point is the noise point or not according to the distance, the reflectivity, the continuity parameter, the noise and the number of echo pulses.

According to an aspect of the present disclosure, the calculating the noise point confidence level of the point comprises: when the distance is within a preset distance range, a distance factor being zero, otherwise the distance factor being a first weight; when the reflectivity is less than or equal to a preset reflectivity threshold, a reflectivity factor being zero, otherwise the reflectivity factor being a second weight; when the continuity parameter is outside a normal continuity parameter range, a continuity factor being zero, otherwise the continuity factor being a third weight; when the noise is greater than a noise threshold, a noise factor being zero, otherwise the noise factor being a fourth weight; when the number of echo pulses is greater than a pulse number threshold, an echo pulse number factor being zero, otherwise the echo pulse number factor being a fifth weight; and the noise point confidence level being equal to a sum of the distance factor, the reflectivity factor, the continuity factor, the noise factor, and the echo pulse number factor.

According to an aspect of the present disclosure, the first weight, the second weight, the third weight, the fourth weight, and the fifth weight satisfy one or more of the following conditions:
the first weight is equal to a sum of the second weight and the third weight;
the second weight is equal to the third weight;
the first weight is equal to a confidence level threshold;
a sum of the fourth weight and the fifth weight is equal to the second weight and/or the third weight; and
the first weight is greater than the second weight, the third weight, the fourth weight, and the fifth weight.

According to an aspect of the present disclosure, the noise point identification method further comprises: dynamically adjusting the third weight, the fourth weight, and the fifth weight according to a detected weather state.

According to an aspect of the present disclosure, the step of dynamically adjusting comprises:
when snow is detected, reducing the second weight and increasing the fourth weight; and/or
when fog is detected, increasing the fifth weight.

According to an aspect of the present disclosure, the step S203 comprises: when the distance is within a preset distance range and the continuity parameter is outside a normal continuity parameter range, judging that the point is the noise point.

According to an aspect of the present disclosure, the step of judging whether the point is the noise point or not comprises: calculating a noise point confidence level of the point, and when the noise point confidence level is outside a normal confidence level range, judging that the point is the noise point, and

the calculating the noise point confidence level of the point comprises: when the distance is within a preset distance range, a distance factor being zero, otherwise the distance factor being a first weight; when the continuity parameter is outside a normal continuity range, a continuity factor being zero, otherwise the continuity factor being a third weight; and the noise point confidence level being equal to a sum of the distance factor and the continuity factor, wherein the first weight is greater than the third weight.

The present disclosure further relates to a laser radar system, comprising:
a laser radar configured to be capable of scanning a surrounding environment to generate a point cloud;
a denoising unit coupled to the laser radar to receive the point cloud, and configured to be capable of executing the noise point identification method as described above, judging whether points in the point cloud are noise points or not, and filtering out the noise points in the point cloud; and
an output unit coupled to the denoising unit and outputting the point cloud.

According to an aspect of the present disclosure, the laser radar system further comprises a control unit that is coupled to the laser radar, the denoising unit and the output unit, and can turn on or disable the denoising unit, wherein when in an on state, the denoising unit filters out the noise points in the point cloud, and the output unit outputs the point cloud after noise filtering; and when in a disabled mode, the denoising unit is disabled, and the output unit outputs the point cloud without noise filtering.

According to an aspect of the present disclosure, the control unit turns on the denoising unit when rain, snow, or fog is detected.

According to an aspect of the present disclosure, when the number of noise points exceeds a preset threshold, the control unit determines that rain, snow, or fog is detected.

According to an aspect of the present disclosure, the laser radar system further comprises an input unit for receiving an input of a user, wherein the control unit can turn on or disable the denoising unit according to the input of the user.

The present disclosure further relates to a laser radar system, comprising:
a laser radar configured to be capable of scanning a surrounding environment to generate a point cloud;
a confidence level calculation unit coupled to the laser radar to receive the point cloud, and configured to calculate a noise point confidence level of a point in the point cloud at least according to at least one of a reflectivity and a continuity parameter of the point, and a distance between the point and the laser radar; and
an output unit coupled to the laser radar and the confidence level calculation unit, and outputting the point cloud and the noise point confidence level of the point in the point cloud.

According to an aspect of the present disclosure, the confidence level calculation unit is configured to: calculate the noise point confidence level of the point in the point cloud according to the distance between the point and the laser radar, the reflectivity of the point, the continuity parameter of the point, noise of the point cloud, and a pulse number factor of the point,
wherein calculating the noise point confidence level of the point comprises: when the distance is within a preset distance range, a distance factor being zero, otherwise the distance factor being a first weight; when the reflectivity is less than or equal to a preset reflectivity threshold, a reflectivity factor being zero, otherwise the reflectivity factor being a second weight; when the continuity parameter is outside a normal continuity parameter range, a continuity factor being zero, otherwise the continuity factor being a third weight; when the noise is greater than a noise threshold, a noise factor being zero, otherwise the noise factor being a fourth weight; when the number of pulses is greater than a pulse number threshold, a pulse number factor being zero, otherwise the pulse number factor being a fifth weight; and the noise point confidence level being equal to a sum of the distance factor, the reflectivity factor, the continuity factor, the noise factor, and the pulse number factor, and
wherein the first weight is greater than the second weight, the third weight, the fourth weight, and the fifth weight.

According to an aspect of the present disclosure, the laser radar system further comprises an input unit for receiving an input of a user, wherein the input unit can instruct the output unit according to the input of the user whether to filter out noise points in the point cloud or not.

The present disclosure further relates to a noise point identification device capable of being used for a laser radar, comprising:
a receiving unit configured to receive a point cloud acquired by the laser radar;
an acquisition unit configured to acquire at least one of a reflectivity and a continuity parameter of a point in the point cloud, and a distance between the point and the laser radar; and
a judgment unit configured to judge whether the point is a noise point or not at least according to at least one of the reflectivity and the continuity parameter, and the distance.

The present disclosure further relates to a computer-readable storage medium, comprising computer-executable instructions stored thereon, which, when executed by a processor, implement the noise point identification method as described above.

### Brief Description of the Drawings

The drawings constituting a part of the present disclosure are used to provide a further understanding of the present disclosure, and the exemplary embodiments of the present disclosure and description thereof are used to explain the present disclosure, and do not constitute an improper limitation of the present disclosure. In the drawings:
Fig. 1 is a schematic diagram showing a laser radar;
Fig. 2 shows a noise point identification method capable of being used for a laser radar according to a first aspect of the present disclosure;
Fig. 3 schematically shows a projection of a plurality of points in a point cloud of a laser radar on a plane perpendicular to a laser light direction;
Fig. 4A shows a noise calculation method for echoes according to an embodiment of the present disclosure;
Fig. 4B shows a comparison between waveform noise in a case of snowy weather and normal waveform noise calculated according to an embodiment of the present disclosure;
Fig. 5 schematically shows a laser radar system according to a second aspect of the present disclosure;
Fig. 6 shows a laser radar system according to a preferred embodiment of the present disclosure;
Fig. 7 shows a laser radar system according to another embodiment of the present disclosure;
Fig. 8 shows a laser radar system according to another embodiment of the present disclosure;
Fig. 9 shows a noise point identification device capable of being used for laser radar according to a third aspect of the present disclosure; and
Fig. 10 shows a computer program product according to a third aspect of the present disclosure.

### Detailed Description of the Preferred Embodiments

In the following, only certain exemplary embodiments are briefly described. Just as can be recognized by a person skilled in the art, the described embodiments may be modified in various different ways without departing from the spirit or scope of the present disclosure. Therefore, the drawings and description are to be regarded as exemplary rather than restrictive in nature.

In the description of the present disclosure, it needs to be understood that the orientation or positional relationships indicated by terms such as "center," "longitudinal," "transverse," "length," "width," "thickness," "up," "down," "front," "rear," "left," "right," "vertical," "horizontal," "top," "bottom," "inner," "outer," "clockwise" and "counterclockwise" are based on the orientation or positional relationship shown in the drawings, and are only for the purpose of the convenience of describing the present disclosure and simplifying the description, instead of indicating or suggesting that the apparatus or element referred to must have a specific orientation or be constructed and operated in a specific orientation. Therefore, these terms cannot be construed as a limitation of the present disclosure. In addition, the terms "first" and "second" are only used for the purpose of description, and cannot be understood as indicating or suggesting relative importance or implicitly indicating the number of indicated technical features. Thus, the features defined with "first" and "second" may explicitly or implicitly comprise one or more of the features. In the description of the present disclosure, "a plurality of" means two or more, unless otherwise expressly and specifically defined.

In the description of the present disclosure, it needs to be noted that unless otherwise expressly stipulated and defined, terms such as "mount," "link" and "connect" should be understood in a broad sense. For example, "connect" may be a fixed connection, or may be a detachable connection, or may be an integral connection. Alternatively, it may be a mechanical connection, or may be an electrical connection, or may be intercommunication. Alternatively, it may be a direct connection, or may be an indirect connection through an intermediate medium, or may be internal communication between two elements or an interaction relationship between two elements. For an ordinary person skilled in the art, the specific meanings of the above-mentioned terms in the present disclosure can be understood according to specific situations.

In the present disclosure, unless expressly stipulated and defined otherwise, a first feature being "above" or "below" a second feature may include the first feature being in direct contact with the second feature, or may include the first feature being in contact with the second feature through other features between them instead of direct contract. Moreover, a first feature being "above," "over" and "on the top of" the second feature includes the first feature being directly above and obliquely above the second feature, or simply indicates that the first feature has a horizontal height higher than that of the second feature. The first feature being "below," "under," and "on the bottom of" the second feature includes the first feature being directly below and obliquely below the second feature, or simply indicates that the first feature has a horizontal height lower than that of the second feature.

The following disclosure provides many different embodiments or examples so as to realize different structures of the present disclosure. In order to simplify the disclosure of the present disclosure, the components and arrangements of specific examples are described below. Of course, they are only examples, and are not intended to limit the present disclosure. In addition, the present disclosure may repeat reference numerals and/or reference letters in different examples, and this repetition is for the purpose of simplification and clarity, and does not itself indicate the relationship between various embodiments and/or arrangements as discussed. In addition, the present disclosure provides examples of various specific processes and materials, but the ordinary person skilled in the art may be aware of the application of other processes and/or the use of other materials.

Preferred embodiments of the present disclosure will be described below in conjunction with the drawings. It should be understood that the preferred embodiments described herein are only used to illustrate and explain the present disclosure, and are not used to limit the present disclosure.

With regard to radar point cloud echo data in rainy, snowy or foggy weather, the inventors of the present disclosure found that noise points in a point cloud of a laser radar can be effectively identified by means of a combination of distances, reflectivity, and continuity parameters of points in the point cloud. It could be understood by the person skilled in the art that although the present disclosure is illustrated by taking a point cloud of a laser radar in a case of rainy, snowy, or foggy weather as an example, the scope of protection of the present disclosure is not limited to the identification of noise points in the rainy, snowy, or foggy weather, and may also be applied to the identification and judgment of noise points in other weather conditions.

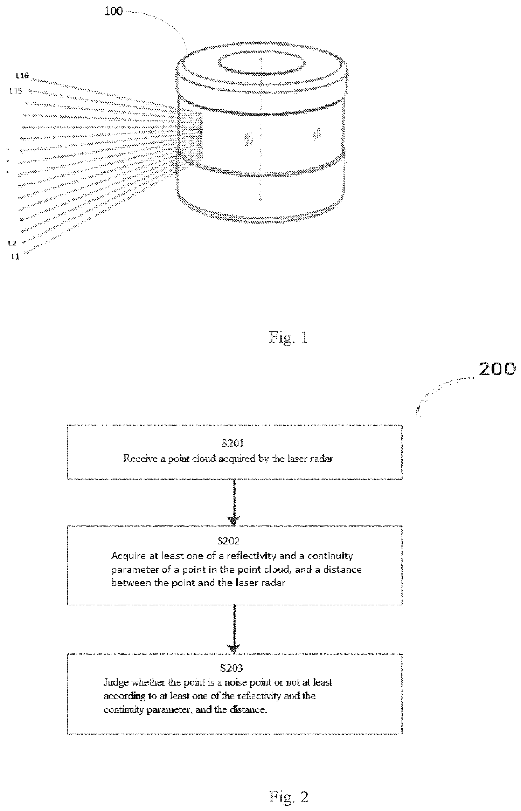

Fig. 1 shows an example of a laser radar 100. The laser radar is a 16-line laser radar, that is, a total of 16 laser beams L1, L2, ..., L15 and L16 (each line of laser beam corresponds to one channel of the laser radar, and there is a total of 16 channels) may be emitted along a vertical direction in the figure for detecting a surrounding environment. In the detection process, the laser radar 100 may be rotated about its vertical axis. In the rotation process, the channels of the laser radar emit laser beams sequentially according to a certain time interval (such as 1 microsecond) and perform detection so as to complete a line scanning in the vertical field of view, and then perform a next line scanning in the vertical field of view as spaced with a certain angle (such as 0.1 degrees or 0.2 degrees) in the direction of the horizontal field of view, so as to perform multiple detections in the rotation process to form a point cloud, so that the condition of the surrounding environment can be perceived.

Fig. 2 shows a noise point identification method capable of be used for a laser radar according to a first aspect of the present disclosure. As shown in Fig. 2, the noise point identification method comprises:
At step S201, receiving a point cloud acquired by the laser radar.

In data of the point cloud obtained by the laser radar, coordinates of points and reflectivity of the points (the reflectivity is proportional to intensity of a reflected beam and a distance between a target point and the laser radar) are usually included. For example, the coordinates of a point are based on an installation position of the laser radar as an origin, and an offset amount of the point may be specifically represented by polar coordinates (i.e., distance and angle), or may be represented by using x/y/z three-dimensional rectangular coordinates.

At step S202, acquiring at least one of a reflectivity and a continuity parameter of a point in the point cloud, a distance between the point and the laser radar.

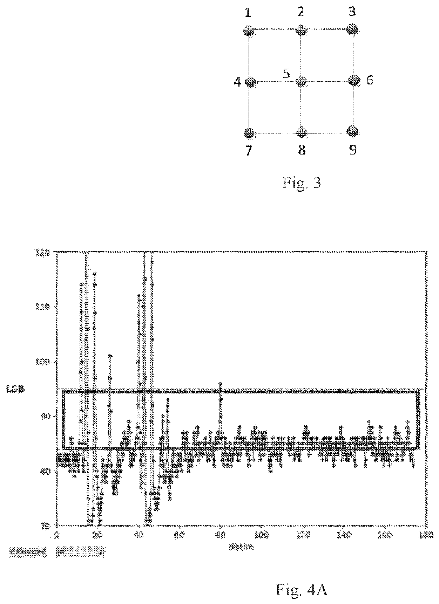

With regard to the distance between the point and the laser radar, it may be calculated directly by means of the coordinates of the point. With regard to the reflectivity of the point, it may be obtained directly from the data of the point cloud. In the present disclosure, the "continuity parameter" of the point can be defined as a characteristic parameter that describes the continuity of the point in the point cloud relative to one or more adjacent points, for example, a distance from one or more surrounding points in the point cloud. The continuity parameter of the present disclosure is described with reference to Fig. 3. Fig. 3 schematically shows a projection of a point cloud of a laser radar on a plane perpendicular to a laser light direction (for the sake of simplicity, its depth information is not shown in Fig. 3). In the figure, point 5 is, for example, a current point to be judged, and is an echo detected by a laser beam of line L2 in Fig. 1 at time tₙ; point 4 is an echo detected by the same channel, i.e., the laser beam of line L2, at previous time tₙ₋₁; and point 6 is an echo detected by the same channel, i.e., the laser beam of line L2, at next time tₙ₊₁. Correspondingly, point 1, point 2, and point 3 are echoes detected by a laser beam of line L3 at time tₙ₋₁, tₙ, tₙ₊₁, and points 7, 8, and 9 are echoes detected by a laser beam of line L1 at time tₙ₋₁, tₙ, tₙ₊₁. Note that although the spacing between the points shown in Fig. 3 is equal, the figure is only schematic and does not mean that the echo points formed by adjacent beams in the point cloud data at consecutive times are equally spaced. In the present disclosure, the continuity parameter of point 5 may refer to an absolute value of a difference between a distance from point 5 to the laser radar, and a distance from any one of eight points at the top, bottom, left, right, top left, top right, bottom left, and bottom right of point 5 to the laser radar, or may refer to a weighted average value of differences between the distance from point 5 to the laser radar, and the distances of a plurality of points among the eight points at the top, bottom, left, right, top left, top right, bottom left, and bottom right of point 5 to the laser radar. These are all within the scope of the present disclosure. Under the motivation of the concept of the present disclosure, the person skilled in the art may make specific adaptations as needed.

When a normal object is detected by a laser radar, the points generated usually have good continuity. The good continuity of the points in the present disclosure means that the absolute value of the difference between the distances from adjacent points to the laser radar is small, for example, within the distance detection error of the laser radar. One of the main application scenarios of the laser radar is to detect various objects in road traffic, and the moving speed of moving objects in the road traffic is very low compared to the speed of light. The horizontal angular resolution of the laser radar is relatively high, such as 0.1 degrees or 0.2 degrees. Therefore, in most cases, especially when the object is closer to the laser radar, for example, within a range of 5-10 meters in which noise points in rainy, snowy or foggy weather are relatively concentrated or prominent, the points of the two adjacent horizontal scanning angles correspond to the same object (except when it is just at the edge of the object). Moreover, the scanning frequency of the laser radar is very high. For example, the time interval for two adjacent channels of the laser radar to scan the same vertical field of view is about 1 microsecond, and a period of a line scan of the vertical field of view is only a dozen or tens of microseconds. The moving distances of the moving objects in the road traffic in such a short time are negligible. Therefore, theoretically, the distances from adjacent points on the point cloud of the laser radar to the laser radar should be equal, and the difference between the actual measured distances should be relatively small. When there is a large distance difference, it is likely to be caused by detected noise points. For example, when the difference (or the weighted average value of multiple differences) between the distance from a certain point to the laser radar and the distance from any one or more of eight points at the top, bottom, left, right, top left, top right, bottom left, and bottom right of the point to the laser radar is greater than a threshold (such as 1 meter), it may be considered that the continuity of the point is relatively poor, and the point may be a noise point. Furthermore, in addition to using the difference (the minimum difference or the maximum difference or the average value of the differences) between the distance from a point to the laser radar and the distance from adjacent points to the laser radar as the continuity parameter, the correlation between a test point and its surrounding points may also be calculated to be used as the continuity parameter. Similar to median filtering, an eigenvalue is obtained by convolution calculation to characterize a degree of discreteness of a current point relative to surrounding points, and when the degree of discreteness is greater than a certain threshold, it is considered that the point and the surrounding ones are not continuous.

In addition, the threshold of the continuity parameter may also be changed. For example, the continuity parameter is adjusted according to the distance between the test point and the laser radar. The greater the distance, the greater the measurement error of the laser radar, and the larger the threshold of the continuity parameter may be set.

In addition, according to another embodiment of the present disclosure, the difference between the distances from two points to the laser radar may also be approximately calculated according to the distance between the two points. This is due to the fact that during the scanning process of the laser radar, the angular interval between points in the horizontal direction is very small, such as 0.1 degrees or 0.2 degrees, and thus, in this case, the distance between point 4 and point 5 is roughly equal to the difference between the distance from point 4 to the laser radar and the distance from point 5 to the laser radar.

At step S203: judging whether the point is a noise point or not at least according to at least one of the reflectivity and the continuity parameter, and the distance.

A method for judging the noise points according to at least one of the reflectivity and the continuity parameter and the distance of the present disclosure will be specifically described.

According to an embodiment of the present disclosure, a combination of distance and reflectivity may be used to identify and judge the noise points. The inventors found that the noise points are usually concentrated within a range of 5-10 meters from the laser radar, or more usually concentrated in a range of 5-7 meters. At the same time, the reflectivity of the noise points is usually less than or equal to 2%. Therefore, the noise points may be identified according to the combination of distance and reflectivity. For example, when the distance is within a preset distance range (such as 5-10 meters, or 5-7 meters), and the reflectivity is less than or equal to a preset reflectivity threshold (such as 2%), it is judged that the point is a noise point.

According to an embodiment of the present disclosure, a combination of distance and continuity parameter may be used to identify and judge the noise points. For example, when the distance is within a preset distance range (such as 5-10 meters, or 5-7 meters), and the continuity parameter is outside a normal continuity range (taking the difference between the distance from the point to the laser radar and the distance from the surrounding points to the laser radar as an example of a continuity parameter, the normal continuity range is less than or equal to 1 meter, or less than or equal to 0.5 meters, for example), the point is judged to be a noise point. As mentioned earlier, the continuity parameter is, for example, the difference between the distance from the current point to the laser radar and the distance from a previous point (a left point in Fig. 3) and/or a next point (right point in Fig. 3) of the same channel to the laser radar, or the difference between the distance from the current point to the laser radar and the distance from points of upper and lower adjacent channels (upper point and/or lower point in Fig. 3) to the laser radar, or the distance between the current point in the point cloud and other adjacent points, or a parameter that characterizes the degree of discreteness of the current point relative to the surrounding points. If the continuity parameter is outside the normal continuity range, then it indicates that the point is likely to be a noise point, rather than a point that is actually located on the surrounding objects.

According to an embodiment of the present disclosure, a combination of distance, reflectivity, and continuity may be used to identify and judge the noise points. For example, when the distance is within a preset distance range (such as 5-10 meters, or 5-7 meters), the reflectivity is less than or equal to a preset reflectivity threshold (such as 2%), and the continuity parameter is outside a normal continuity parameter range (such as 1 meter), the point is judged to be a noise point.

In addition, the inventors of the present application found that the noise of the echo corresponding to the point to be judged is also a factor that may be used to judge the noise point, especially in the case of snowy weather. In the laser radar, a beam of laser light emitted by an emitter of the laser radar encounters an object, is diffusely reflected to form an echo, and is received by a laser receiver to generate an analog data signal (i.e., an echo waveform signal). The analog data signal is sampled, quantized and encoded through an ADC according to a certain frequency to obtain a series of sampling points, as shown in Fig. 4A. The noise of the waveform may be characterized by using an RMS value, i.e., characterizing the degree of fluctuation of the waveform. It may be specifically calculated by obtaining a sum of a square of a difference between each sampling point and an echo baseline and then taking a square root of the sum. The echo baseline here refers to an average value of signals generated by the laser receiver without the reflection of the beams of laser light, and can be understood as a background noise signal value.

In addition, because the calculation of the RMS value is relatively complicated, and FPGA has limited computing resources, it is more difficult to use the FPGA to calculate. Moreover, the waveform may include normal echo signals in addition to noise, and it is difficult to perform statistic calculations on the waveform. Therefore, other values that are easier to calculate may also be used to characterize the noise of the waveform. For example, according to a preferred embodiment of the present disclosure, as shown in Fig. 4A, the echo baseline is 85 Least Significant Bit (LSB) value of the ADC, wherein within the range of 10 LSB value above the echo baseline, 200 sampling points (which is an empirical value; of course, 100 sampling points or 300 sampling points may also be taken) are counted from left to right, and a sum or an average value of the difference between an ordinate value of each sampling point and the echo baseline, or the area of a figure enclosed by a curve formed by connecting the 200 sampling points, a straight line passing through the abscissa of the first sampling point and parallel to a Y axis, a straight line passing through the abscissa of the 200th sampling point and parallel to the Y-axis, and the echo baseline is used to characterize the magnitude of the noise of the waveform. It should be noted that the LSB value is a unit that characterizes the magnitude of the signal sampled by the ADC in the circuit, and it is related to the performance of the used ADC. In addition, the 10 LSB value above the echo baseline selected in this preferred embodiment is related to an echo signal detection threshold preset by the laser radar. The echo signal detection threshold is used by the system to determine that a signal is an effective echo signal when the strength of the signal is greater than or equal to the threshold, and to determine that the signal is noise when the signal strength is less than the threshold. The person skilled in the art may also select other suitable values by using the existing technical knowledge in the field grasped by him. Of course, in specific implementations, the person skilled in the art may also use units other than the LSB value to characterize the strength of the echo signal. Here, using the LSB value as the echo unit to describe the strength of the echo signal is only for the purpose of enabling the person skilled in the art to better understand and implement the present invention, and no limitation is imposed on the scope of protection of the present invention.

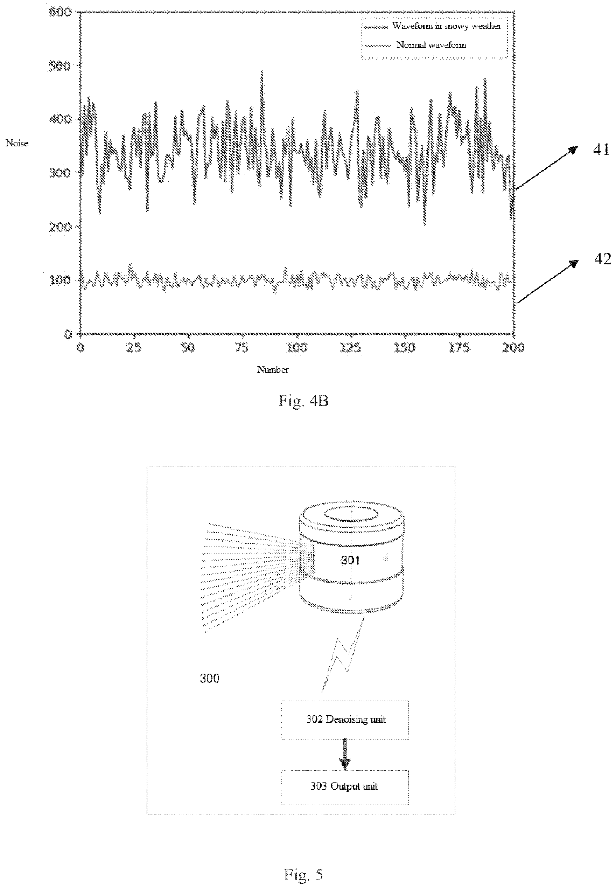

According to an embodiment of the present disclosure, this method is used to calculate the noise of echoes of normal points and echoes of noise points caused by snow in snowy conditions. As shown in Fig. 4B, the noise of the echoes of the noise points caused by snow is 200 (unitless) or more, whereas the noise of the waveform at the normal points is only about 100. They may be easily distinguished from each other. In addition, although line 41 and line 42 in Fig. 4B appear to be continuous lines, they are both actually the lines formed by connecting discrete points one by one. The abscissa represents the number of measurement points. At present, the abscissa on the figure is 200, which indicates that the same scene has been detected 200 times (200 points). Correspondingly, 200 noise detection results, such as 200 waveforms of echo signals similar to those in FIG. 4A, are acquired. Then, for example, for the abscissa of 1, the ordinate of the point on line 42 indicates that the noise of the echo of the normal point is 99, and the ordinate of the point on line 41 indicates that the noise of the echo of the noise point caused by snow is 302. For another example, for the abscissa of 25 indicating the 25th test, the ordinate of the point on line 42 indicates that the noise of the echo of the normal point is 102, and the ordinate of the point on line 41 indicates that the noise of the echo of the noise point caused by snow is 298.

According to an embodiment of the present disclosure, a combination of distance, reflectivity, continuity, and noise may be used to identify and judge noise points. For example, when the distance is within a preset distance range (such as 5-10 meters, or 5-7 meters), the reflectivity is less than or equal to a preset reflectivity threshold (such as 2%), the continuity parameter is outside a normal continuity parameter range (such as 1 meter), and the noise of the point is greater than a noise threshold (such as 200), the point is judged to be a noise point.

In addition, the inventors of the present application found that the number of echo pulses is also a factor that can be used to judge noise points. A laser beam including a laser pulse hits an object and is reflected to form an echo light beam, and the echo light beam is detected by a laser radar. Theoretically, the number of echo pulses detected should be only one. However, in the actual detection process, due to various reasons, the number of echo pulses larger than a measurement threshold that can be detected is often greater than one. For example, as the propagation distance increases, the laser beam will expand continuously and may hit two different objects before and after. The inventors found that the number of echo pulses also increases when encountering rainy, snowy, or foggy weather. Therefore, when a certain point is detected, and the number of echo pulses detected is greater than a pulse number threshold (such as 3), it can indicate that the point may be a noise point. In addition, in order to reduce the crosstalk between two different laser radars, the laser beam emitted by the laser radar is usually pulse-encoded. For example, a detection laser beam includes two laser pulses encoded at a time interval, namely, double-pulse laser detection. Therefore, during double-pulse laser detection, the pulse number threshold may be set to 7. For example, when the number of echo pulses detected is greater than the pulse number threshold (such as 7), it indicates that the point may be a noise point.

According to an embodiment of the present disclosure, a combination of distance, reflectivity, and number of continuous echo pulses may be used to identify and judge noise points. For example, when the distance is within a preset distance range (such as 5-10 meters, or 5-7 meters), the reflectivity is less than or equal to a preset reflectivity threshold (such as 2%), the continuity parameter is outside a normal continuity parameter range (such as 1 meter), and the number of echo pulses is greater than a pulse number threshold (such as 7), the point is judged to be a noise point.

According to an embodiment of the present disclosure, a combination of distance, reflectivity, continuity, noise, and number of echo pulses may be used to identify and judge noise points. For example, when the distance is within a preset distance range (such as 5-10 meters, or 5-7 meters), the reflectivity is less than or equal to a preset reflectivity threshold (such as 2%), the continuity parameter is outside a normal continuity parameter range (such as 1 meter), the noise of the point is greater than a noise threshold (such as 200), and the number of echo pulses is greater than a pulse number threshold (such as 7), the point is judged to be a noise point.

According to an embodiment of the present disclosure, a combination of continuity and reflectivity may be used to identify and judge noise points. For example, when the continuity parameter is outside a normal continuity parameter range (such as 1 meter), and the reflectivity is less than or equal to a preset reflectivity threshold (such as 2%), the point is judged to be a noise point.

According to an embodiment of the present disclosure, a combination of continuity, reflectivity, and noise may be used to identify and judge noise points. For example, when the continuity parameter is outside a normal continuity parameter range (such as 1 meter), the reflectivity is less than or equal to a preset reflectivity threshold (such as 2%), and the noise of the point is greater than a noise threshold (such as 200), the point is judged to be a noise point.

According to an embodiment of the present disclosure, a combination of continuity, reflectivity, and number of echo pulses may be used to identify and judge noise points. For example, when the continuity parameter is outside a normal continuity parameter range (such as 1 meter), the reflectivity is less than or equal to a preset reflectivity threshold (such as 2%), and the number of echo pulses is greater than a pulse number threshold (such as 7), the point is judged to be a noise point.

According to an embodiment of the present disclosure, a combination of continuity, reflectivity, noise, and number of echo pulses may be used to identify and judge noise points. For example, when the continuity parameter is outside a normal continuity parameter range (such as 1 meter), the reflectivity is less than or equal to a preset reflectivity threshold (such as 2%), the noise of the point is greater than a noise threshold (such as 200), and the number of echo pulses is greater than a pulse number threshold (such as 7), the point is judged to be a noise point.

According to an embodiment of the present disclosure, the noise may be used to judge whether the weather condition is snowy or not. For example, when the noise of the point is greater than a noise threshold (such as 200), it is determined that the weather condition is snowy, or the noise point is a noise point caused by the snowy weather conditions. The echo noise in the snowy weather is relatively large. As shown in Fig. 4B, almost all points in the snowy weather have echo noise of 200 or more, and the snowy noise point can be substantially judged by means of the factor of echo noise.

According to an embodiment of the present disclosure, a combination of noise and distance may be used to identify and judge whether the weather condition is snowy or not. For example, when the noise of the point is greater than a noise threshold (such as 200) and the distance is within a preset distance range (such as 5-10 meters, or 5-7 meters), it is determined that the weather conditions are snowy, or the point is a noise point caused by the snowy weather conditions.

According to an embodiment of the present disclosure, a combination of noise and continuity may be used to identify and judge whether the weather conditions are snowy or not. For example, when the noise of the point is greater than a noise threshold (such as 200) and the continuity parameter is outside a normal continuity parameter range (such as 1 meter), it is determined that the weather conditions are snowy, or the point is a noise point caused by the snowy weather conditions.

According to an embodiment of the present disclosure, a combination of noise, distance, and continuity may be used to identify and judge whether the weather conditions are snowy or not. For example, when the noise of the point is greater than a noise threshold (such as 200), the distance is within a preset distance range (such as 5-10 meters, or 5-7 meters), and the continuity parameter is outside a normal continuity parameter range (such as 1 meter), it is determined that the weather conditions are snowy, or the point is a noise point caused by the snowy weather conditions.

According to an embodiment of the present disclosure, a combination of noise, distance, and number of echo pulses may be used to identify and judge whether the weather conditions are snowy or not. When the noise of the point is greater than a noise threshold (such as 200), the distance is within a preset distance range (such as 5-10 meters, or 5-7 meters), and the number of echo pulses is greater than a pulse number threshold (such as 7), it is determined that the weather conditions are snowy, or the point is a noise point caused by the snowy weather conditions.

According to an embodiment of the present disclosure, a combination of noise, distance, continuity, and number of echo pulses may be used to identify and judge whether the weather conditions are snowy or not. When the noise of the point is greater than a noise threshold (such as 200), the distance is within a preset distance range (such as 5-10 meters, or 5-7 meters), the continuity parameter is outside a normal continuity parameter range (such as 1 meter), and the number of echo pulses is greater than a pulse number threshold (such as 7), it is determined that the weather conditions are snowy, or the point is a noise point caused by the snowy weather conditions.

According to an embodiment of the present disclosure, a combination of number of echo pulses and distance may be used to identify and judge whether the weather conditions are rainy or foggy or not. When the number of echo pulses is greater than a pulse number threshold (such as 7) and the distance is within a preset distance range (such as 5-10 meters, or 5-7 meters), it is determined that the weather conditions are rainy or foggy, or the point is a noise point caused by the rainy or foggy weather conditions. As enumerated in the above embodiments, various parameters such as distance, reflectivity, continuity, noise and pulse number, and various combinations thereof may be used to determine noise points and specific weather conditions. According to an embodiment of the present disclosure, it is also possible to calculate a noise point confidence level of a point, and when the noise point confidence level is outside a normal confidence level range, the point is judged to be a noise point.

For each of the above various combination examples, corresponding noise confidence levels may be calculated, and a calculation method thereof will be only exemplified below.

For an embodiment in which a combination of distance and reflectivity is used to identify and judge noise points, for example, a calculation method shown in Table I may be used.

**Table 1**

| **Feature Quantity** | **Determination Condition** | **Weight** |
|---|---|---|
| Distance | Distance between 5 and 10 meters | 10 |
| Reflectivity | Reflectivity less than or equal to 2% | 5 |

For example, for each of the above feature quantities, if the determination condition of the feature quantity is satisfied, then a contribution coefficient or factor of the confidence level brought by the feature quantity is 0, otherwise, the contribution coefficient or factor of the confidence level brought by the feature quantity is a weight of the feature quantity. Finally, if it is determined that the total confidence level is outside the normal confidence level range, then it is judged as a noise point. For example, if the distance between a certain point m and the laser radar is 12 m, then a distance judgment function is not satisfied, and a distance factor is 10; and if the reflectivity is 3%, then a determination condition for reflectivity is not satisfied, and a reflectivity factor is 5. A noise point confidence level is equal to a sum of the distance factor and the reflectivity factor, that is, 10+5=15. The normal confidence level range may be set according to experience and/or specific weather or environmental conditions. According to one embodiment, the normal confidence level range is greater than or equal to 10. When the confidence level is greater than or equal to 10, it indicates that the point is a normal point; and when the confidence level is outside the range, i.e., less than 10, it indicates that the point is a noise point. According to an embodiment of the present disclosure, a weight (a first weight) of the distance is greater than a weight (a second weight) of the reflectivity, as shown in Table 1.

It should be noted that the weight of each of the above feature quantities and the normal confidence level range of 10 are only an embodiment of the present disclosure, and the weight of each of the feature quantities and the normal confidence level range may be changed as needed. An endpoint value of the normal confidence level range may be referred to as a confidence level threshold, for example, 10.

Table 2 shows a method for identifying and judging a noise point by using a combination of distance, reflectivity, and continuity to calculate the noise point confidence level.

**Table 2**

| **Feature Quantity** | **Determination Condition** | **Weight** |
|---|---|---|
| Distance | Distance between 5 and 10 meters | 10 |
| Reflectivity | Reflectivity less than or equal to 2% | 5 |
| Continuity | Continuity parameter exceeding 1 meter | 5 |

For example, the calculation of the noise point confidence level of the point is as follows: when the distance is within a preset distance range, a distance factor is zero, otherwise the distance factor is a first weight (i.e., the weight of the distance); when the reflectivity is less than or equal to a preset reflectivity threshold, a reflectivity factor is zero, otherwise the reflectivity factor is a second weight (i.e., the weight of the reflectivity); and when the continuity parameter is outside a normal continuity range, a continuity factor is zero, otherwise the continuity factor is a third weight (i.e., the weight of continuity). The noise point confidence level is equal to a sum of the distance factor, the reflectivity factor, and the continuity factor.

Table 3 shows a method for identifying and judging a noise point by using a combination of distance, reflectivity, continuity, noise, and number of echo pulses to calculate the noise point confidence level.

**Table 3**

| **Feature Quantity** | **Determination Condition** | **Weight** |
|---|---|---|
| Distance | Distance between 5 and 10 meters | 10 |
| Reflectivity | Reflectivity less than or equal to 2% | 5 |
| Continuity | Continuity parameter exceeding 1 meter | 5 |
| Noise | Waveform floor noise greater than 200 | 3 |
| Number of pulses | Number of pulses greater than 7 | 3 |

For example, the calculation of the noise point confidence level of the point is as follows: when the distance is within a preset distance range, a distance factor is zero, otherwise the distance factor is a first weight (i.e., the weight of the distance); when the reflectivity is less than or equal to a preset reflectivity threshold, a reflectivity factor is zero, otherwise the reflectivity factor is a second weight (i.e., the weight of the reflectivity); when the continuity parameter is outside a normal continuity parameter range, a continuity factor is zero, otherwise the continuity factor is a third weight (i.e., the weight of continuity); when the noise is greater than a noise threshold, a noise factor is zero, otherwise the noise factor is a fourth weight (i.e., the weight of the noise); and when the number of echo pulses is greater than a pulse number threshold, an echo pulse number factor is zero, otherwise the echo pulse number factor is a fifth weight (i.e., the weight of the echo pulse number). The noise point confidence level is equal to a sum of the distance factor, the reflectivity factor, the continuity factor, the noise factor, and the echo pulse number factor.

According to a preferred embodiment of the present disclosure, the first weight, the second weight, the third weight, the fourth weight, and the fifth weight satisfy one or more of the following conditions:
the first weight is equal to a sum of the second weight and the third weight;
the second weight is equal to the third weight;
the first weight is equal to the confidence level threshold;
a sum of the fourth weight and the fifth weight is equal to the second weight and/or the third weight; and
the first weight is greater than the second weight, the third weight, the fourth weight, and the fifth weight.

According to a preferred embodiment of the present disclosure, the first weight, the second weight, the third weight, the fourth weight, and the fifth weight may be dynamically adjusted according to a detected weather state, including adjusting the respective absolute values of the weights and the relative proportional relationships therebetween.

For example, the echo noise of the noise point caused by the snowy weather is relatively large, and almost all noise points caused by the snowy weather in the point cloud have echo noise of 200 or more. In addition, the reflectivity value of the noise point caused by the snowy weather will be relatively large, and it is difficult to judge the noise point caused by the snowy weather through the reflectivity. Therefore, the weight of reflectivity should be reduced accordingly in the snowy weather. Therefore, when snow is detected, the second weight (reflectivity) may be dynamically reduced and the fourth weight (echo noise) may be increased.

In addition, when foggy weather is detected, the fifth weight may be increased.

The noise point identification method (continuity + reflectivity) of the present disclosure is used on FPGA to perform denoising processing on the point cloud of the laser radar. As a result, it is found that the noise points generated in the rainy weather can be filtered out very effectively. A ratio of normal points that are lost due to the filtering operation is 1/144, which is completely within an acceptable range.

The threshold values and weight values of various parameters, and the proportional relationships among the weights in the above embodiments are only determined by the inventors according to experience and a large number of experiments. They are preferred embodiments of the present disclosure, and should not be used to limit the scope of protection of the present disclosure.

### Second Aspect

The second aspect of the present disclosure relates to a laser radar system 300. It will be described in detail below with reference to Fig. 5.

As shown in Fig. 5, the laser radar system 300 comprises: a laser radar 301, a denoising unit 302, and an output unit 303. The laser radar 301 may be, for example, an existing laser radar, such as the laser radar 100 shown in Fig. 1. It is configured to scan the surrounding environment to generate data of a point cloud, and its specific structure will not be described in detail. The denoising unit 302 is coupled to the laser radar 301 to receive the point cloud. The denoising unit 302 is configured to execute the noise point identification method 200 as described in the first aspect of the present disclosure to judge whether points in the point cloud are noise points or not, and to filter out the noise points in the point cloud. The output unit 303 is coupled to the denoising unit 302, and outputs the point cloud. The information flow from the denoising unit 302 to the output unit 302 shown in the figure is unidirectional. The present disclosure is not limited thereto, and there may also be a bidirectional information flow between the two.

The laser radar 301, the denoising unit 302, and the output unit 303 shown in Fig. 5 are three separate units, which are only schematic. Both the denoising unit 302 and the output unit 302 may be integrated in the laser radar 301. For example, a denoising unit 302 is added to the existing laser radar 301 to receive the data of the point cloud, the noise points are judged and filtered out according to the noise point identification method 200, and then the point could after filtering out the noise points is output through the output unit 303, i.e., an output interface, and presented to a user. Of course, the laser radar 301, the denoising unit 302, and the output unit 303 may also be separate units. For example, the laser radar 301 is only responsible for detecting the surrounding environment by laser light and outputting original point cloud data. The denoising unit 302 and the output unit 303 may be, for example, a computer, a workstation, or an application specific integrated circuit (ASIC) responsible for data processing. After receiving the point cloud data, they perform identification, filtering, and output operations on the noise points. These are all within the scope of protection of the present disclosure.

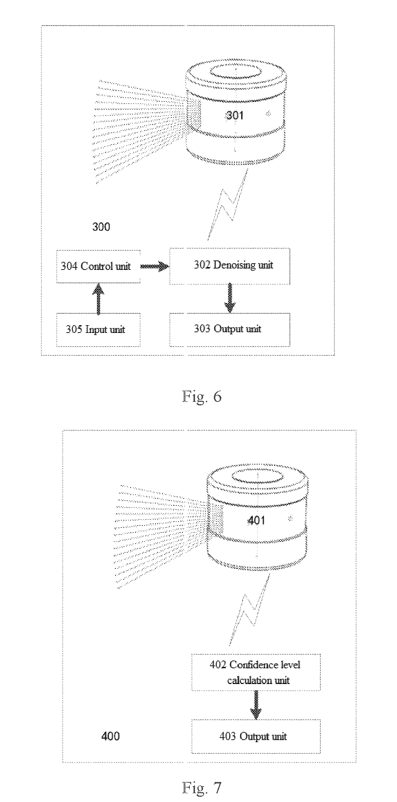

Fig. 6 shows a preferred embodiment according to the present disclosure. The laser radar system 300 further comprises a control unit 304. The control unit 304 is coupled to the denoising unit 302, and may turn on or disable the denoising unit 302. When in an on state, the denoising unit 302 filters the noise points in the point cloud, and the output unit 303 outputs the point cloud after filtering of the noise points; and when in a disabled mode, the denoising unit 302 is disabled, and the output unit 303 outputs the point cloud without filtering of the noise points. Preferably, the control unit 304 is coupled to the laser radar 301 and the output unit 303.

According to a preferred embodiment of the present disclosure, the denoising unit 302 is turned on by default.

According to a preferred embodiment of the present disclosure, the denoising unit 302 is turned off by default and turned on under certain circumstances. For example, when rain, snow or fog is detected, the control unit 304 turns on the denoising unit 302. This is because in the rainy, snowy or foggy weather state, there is a large amount of liquid or solid water in the air, which is prone to produce some abnormal radar echoes, thereby generating a large number of noise points in the point cloud.

According to a preferred embodiment of the present disclosure, for example, when the number of noise points exceeds a preset threshold, the control unit 304 determines that rain, snow, or fog is detected. For example, a counter may be set in the control unit 304 or the denoising unit 302 to count the number of noise points of a currently detected point cloud. When the count value exceeds a preset threshold, it may be determined that the current weather conditions are rainy, snowy, or foggy. Thus, the denoising unit 302 is triggered to be turned on.

Preferably, the laser radar system 300 may also include a precipitation sensor, such as an optical sensor or a capacitive sensor. When the rainy, snowy, or foggy weather conditions are detected, an output signal of a precipitation sensor may trigger the denoising unit 302 to be turned on. Taking an optical sensor as an example, it comprises a light-emitting diode and a transparent window. When no precipitation occurs, almost all the light emitted by the light-emitting diode will be reflected onto a photosensitive element. When precipitation occurs, for example, in the rainy, snowy, or foggy weather state, there will be water droplets or water vapor on the transparent window, and part of the light emitted by the light-emitting diode will be deflected, causing the total amount of light received by the photosensitive element to change. Thus, it may be determined that the rainy, snowy, or foggy weather conditions are detected, and then the denoising unit 302 is triggered.

According to a preferred embodiment of the present disclosure, it is also possible to judge the rainy, snowy, or foggy weather according to some of the aforementioned parameters, and to trigger the denoising unit 302 to be turned on. For example, when the reflectivity of a point in the point cloud is higher than a certain threshold, it may be determined that it is snowy, and at this time, the denoising unit 302 may be triggered to be turned on. In addition, when the number of echo pulses of a point in the point cloud exceeds a certain threshold, it may be determined that it is foggy, and at this time, the denoising unit 302 may be triggered to be turned on.

As shown in Fig. 6, according to a preferred embodiment of the present disclosure, the laser radar system 300 further comprises an input unit 305 for receiving an input of a user. The control unit 304 may turn on or disable the denoising unit 302 according to the input of the user. The advantage of this is that the user may decide whether to enable the denoising unit 302 or not and whether to perform a noise point filtering operation or not.

Fig. 7 shows a laser radar system 400 according to another embodiment of the present disclosure. As shown in Fig. 7, the laser radar system 400 comprises a laser radar 401, a confidence level calculation unit 402 and an output unit 403. The laser radar 401 is configured to be capable of scanning the surrounding environment to generate a point cloud, and its specific structure will not be described in detail. The confidence level calculation unit 402 is coupled to the laser radar 401 to receive the point cloud, and configured to calculate a noise point confidence level of a point in the point cloud at least according to at least one of a reflectivity and a continuity parameter of the point, and a distance between the point and the laser radar. The output unit 403 is coupled to the laser radar 401 and the confidence level calculation unit 402, and outputs the point cloud and the noise point confidence levels of the points in the point cloud.

With regard to the calculation method of the noise point confidence level, it is similar to that described in the first aspect of the present disclosure. The calculation may be performed by a combination of one or more of the five feature quantities of distance, reflectivity, continuity, noise, and number of echo pulses. Here, one example will be provided only, and the rest will not be redundantly repeated. For example, the noise point confidence level of a point in the point cloud is calculated according to the distance between the point and the laser radar, the reflectivity of the point, the continuity parameter of the point, the noise of the point cloud, and the pulse number factor of the point. For example, the specific calculation comprises: when the distance is within a preset distance range, a distance factor being zero, otherwise the distance factor being a first weight; when the reflectivity is less than or equal to a preset reflectivity threshold, a reflectivity factor being zero, otherwise the reflectivity factor being a second weight; when the continuity parameter is outside a normal continuity parameter range, a continuity factor being zero, otherwise the continuity factor being a third weight; when the noise is greater than a noise threshold, a noise factor being zero, otherwise the noise factor being a fourth weight; when the number of pulses is greater than a pulse number threshold, a pulse number factor being zero, otherwise the pulse number factor being a fifth weight; and the noise point confidence level being equal to a sum of the distance factor, the reflectivity factor, the continuity factor, the noise factor, and the pulse number factor.

Preferably, the first weight is greater than the second weight, the third weight, the fourth weight, and the fifth weight.

Similar to the laser radar system 300 shown in Figs. 5 and 6, in the laser radar system 400 in Fig. 7, the confidence level calculation unit 402 and the output unit 403 may be integrated in the laser radar 401, or the three may be implemented as separate units. These are all within the scope of protection of the present disclosure.

With the technical solution of the present embodiment, while outputting the point cloud, the noise confidence level of the points in the point cloud may also be provided to the user at the same time. In a specific implementation, one or more bits may be added to the point cloud data of the laser radar, and confidence level information is filled in the bit. The confidence level information is provided to a customer to give the user a reference, and whether to optimize the radar point cloud image or filter out the noise points according to the confidence level information is decided by the customer.

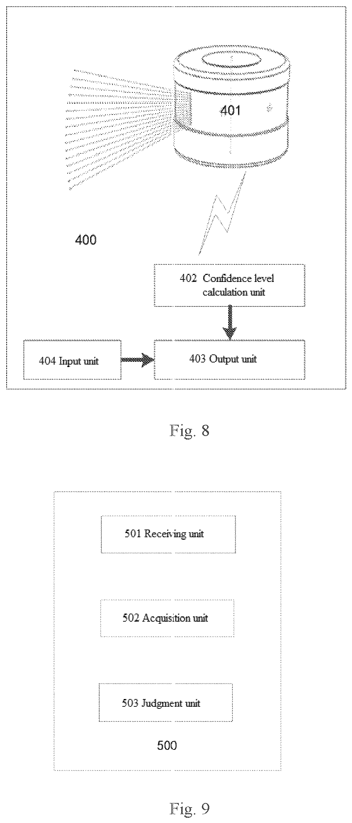

As shown in Fig. 8, according to a preferred embodiment of the present disclosure, the laser radar system 400 further comprises an input unit 404 for receiving an input of a user, wherein the input unit 404 may indicate according to the input of the user whether the output unit filters out the noise points in the point cloud. For example, when the user thinks that there are more noise points in the output point cloud (for example, in the case of rainy, snowy or foggy weather), and the noise points need to be filtered out, the user may instruct the output unit 403 by means of the input unit 404 to filter out the noise points and then output the point cloud. After the output unit 403 receives the instruction to filter the noise points, according to the noise point confidence level of a point in the point cloud, when the noise point confidence level is outside the normal confidence level range, the point is judged to be a noise point and filtered out. Thus, no noise point or as few noise points as possible are included in the output point cloud.

### Third Aspect

The third aspect of the present disclosure further relates to a noise point identification device 500 capable of being used for a laser radar. As shown in Fig. 9, the noise point identification device 500 comprises: a receiving unit 501 configured to receive a point cloud acquired by the laser radar; an acquisition unit 502 configured to acquire at least one of a reflectivity and a continuity parameter of a point in the point cloud, and a distance between the point and the laser radar; and a judging unit 503 configured to judge whether the point is a noise point or not at least according to at least one of the reflectivity and continuity parameters and the distance.

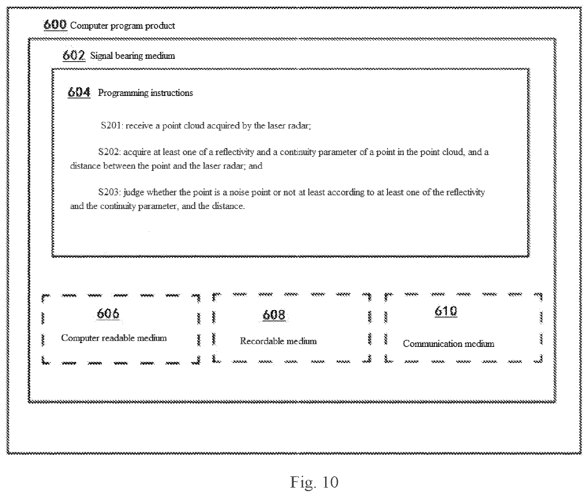

The third aspect of the present disclosure further relates to a block diagram of a computer program product 600, as shown in Fig. 10. A signal bearing medium 602 may be implemented as or comprise a computer readable medium 606, a computer recordable medium 608, a computer communication medium 610, or a combination thereof, which stores programming instructions 604 that may be configured with a processor to execute all or some of the processes described previously. These instructions may include, for example, one or more executable instructions for causing one or more processors to perform the following processing: S201: receiving a point cloud acquired by the laser radar; S202: acquiring at least one of a reflectivity and a continuity parameter of a point in the point cloud, and a distance between the point and the laser radar; and S203: judging whether the point is a noise point or not at least according to at least one of the reflectivity and continuity parameters and the distance.

The description of any process or method in a flow chart or otherwise set forth herein may be understood to represent one or more modules, segments or portions of codes of executable instructions for steps of implementing a specific logical function or process, and the range of the preferable embodiments hereof includes other implementations in which the orders shown or discussed herein may not be followed, including executing a function involved in the substantially simultaneous manner or in the reverse order according to the function. This should be understood by a person skilled in the technical field to which the embodiments of the present disclosure belong. The logics and/or steps shown in a flow chart or otherwise set forth herein, for example, may be regarded as a sequencing list of executable instructions for implementing a logical function, and may be specifically implemented in any computer readable medium for use by instruction execution systems, apparatuses or devices (such as a computer-based system, a system comprising a processor or other systems that may read and execute instructions from the instruction execution systems, apparatuses or devices), or for use in combination with these instruction execution systems, apparatuses or devices. In terms of the description, "computer readable medium" may be any apparatus that may include, store, communicate, propagate or transmit programs for use by instruction execution systems, apparatuses or devices, or for use in combination with these instruction execution systems, apparatuses or devices. More specific examples (a non-exhaustive list) of the computer readable medium include the following: an electric connection portion (electronic apparatus) having one or more wirings, a portable computer enclosure (magnetic apparatus), a random access memory (RAM), a read only memory (ROM), an electrically programmable read-only-memory (EPROM or flash memory), an optical fiber apparatus, and a CD read-only-memory (CDROM).

In addition, the computer readable medium may even be paper or other suitable media on which the programs may be printed. This is because the programs may be obtained electronically, for example, by means of optically scanning paper or other media, then editing, interpreting, or processing in other suitable manners as necessary, and then they are stored in a computer memory. It should be understood that each part of the present disclosure may be implemented by means of hardware, software, firmware or a combination thereof.

In the embodiments described above, a plurality of steps or methods may be implemented by means of software or firmware stored in a memory and executed by a suitable instruction execution system. For example, if they are implemented by means of hardware, any of the following technologies well-known in the art, or combinations thereof, may be used to implement them as in another embodiment: a discrete logical circuit with logical gate circuits for implementing logical functions for data signals, an application-specific integrated circuit with suitable combined logical gate circuits, a programmable gate array (PGA), a field programmable gate array (FPGA), and so on.

Furthermore, the solutions of the embodiments herein are not only applicable to the mechanical laser radar as mentioned in the above embodiments, but also applicable to other types of laser radars, such as galvanometer scanning laser radar, rotating mirror scanning laser radar, or pure solid-state laser radar including Flash laser radar and phased array laser radar. The present invention does not impose any limitation on the types of applicable laser radars. Finally, it should be noted that the contents described above are just preferable embodiments of the present disclosure, and are not used to limit the present disclosure. Although the detailed description of the present disclosure has been provided with reference to the foregoing embodiments, the person skilled in the art still may make modifications to the technical solutions set forth in aforementioned embodiments, or conduct equivalent replacements of some of the technical features therein. Any modification, equivalent replacement, improvement, etc. made within the spirit and principle of the present disclosure shall be included in the scope of protection of the present disclosure.

## Claims

1. A noise point identification method adapted to be used with a laser radar, comprising:
step S201: receiving a point cloud acquired by the laser radar;
step S202: acquiring at least one of a reflectivity and a continuity parameter of a point in the point cloud, and a distance between the point and the laser radar;
step S203: judging whether the point is a noise point or not at least according to at least one of the reflectivity and the continuity parameter, and the distance, wherein the step S203 comprises:
determining a distance factor and a reflectivity factor, wherein:
the distance factor being zero or a first weight and the reflectivity factor being zero or a second weight; when the distance is within a preset distance range, a distance factor being zero, otherwise the distance factor being the first weight; when the reflectivity is less than or equal to a preset reflectivity threshold, a reflectivity factor being zero, otherwise the reflectivity factor being the second weight; and
the first weight and the second weight are dynamically adjusted according to a detected weather state;
calculating a noise point confidence level of the point based on a sum of the
distance factor and the reflectivity factor; and
when the noise point confidence level is outside a normal confidence level range, judging that the point is the noise point.

2. The noise point identification method according to claim 1, wherein the step S202 comprises: acquiring the reflectivity of the point in the point cloud, and the distance between the point and the laser radar, and
wherein the step S203 comprises: judging whether the point is the noise point or not according to the reflectivity and the distance.

3. The noise point identification method according to claim 1, wherein the step S202 comprises: acquiring the continuity parameter of the point in the point cloud, and the distance between the point and the laser radar, and
wherein the step S203 comprises: judging whether the point is the noise point or not according to the continuity parameter and the distance.

4. The noise point identification method according to claim 2, wherein the step S203 comprises:
when the distance is within a preset distance range and the reflectivity is less than or equal to a preset reflectivity threshold, judging that the point is the noise point; or
calculating the noise point confidence level of the point, and when the noise point confidence level is outside the normal confidence level range, judging that the point is the noise point, and
wherein the calculating the noise point confidence level of the point further comprises: when the distance is within a preset distance range, the distance factor being zero, otherwise the distance factor being the first weight; when the reflectivity is less than or equal to a preset reflectivity threshold, the reflectivity factor being zero, otherwise the reflectivity factor being the second weight; and the noise point confidence level being equal to a sum of the distance factor and the reflectivity factor, wherein the first weight is greater than the second weight.

5. The noise point identification method according to claim 2, wherein the step S202 comprises: acquiring the reflectivity and the continuity parameter of the point, and the distance between the point and the laser radar; and
wherein the step S203 comprises: judging whether the point is the noise point or not according to the distance, the reflectivity and the continuity parameter.

6. The noise point identification method according to claim 5, further comprising: acquiring noise of the point and a number of echo pulses of the point;
wherein the step S203 comprises: judging whether the point is the noise point or not according to the distance, the reflectivity, the continuity parameter, the noise and the number of echo pulses.

7. The noise point identification method according to claim 6,
wherein the calculating the noise point confidence level of the point comprises: when the distance is within a preset distance range, the distance factor being zero, otherwise the distance factor being the first weight; when the reflectivity is less than or equal to a preset reflectivity threshold, the reflectivity factor being zero, otherwise the reflectivity factor being the second weight; when the continuity parameter is outside a normal continuity parameter range, a continuity factor being zero, otherwise the continuity factor being a third weight; when the noise is greater than a noise threshold, a noise factor being zero, otherwise the noise factor being a fourth weight; when the number of echo pulses is greater than a pulse number threshold, an echo pulse number factor being zero, otherwise the echo pulse number factor being a fifth weight; and the noise point confidence level being equal to a sum of the distance factor, the reflectivity factor, the continuity factor, the noise factor, and the echo pulse number factor.

8. The noise point identification method according to claim 7, wherein the first weight, the second weight, the third weight, the fourth weight, and the fifth weight satisfy one or more of the following conditions:
the first weight is equal to a sum of the second weight and the third weight;
the second weight is equal to the third weight;
the first weight is equal to a confidence level threshold;
a sum of the fourth weight and the fifth weight is equal to the second weight and/or the third weight; and
the first weight is greater than the second weight, the third weight, the fourth weight, and the fifth weight.

9. The noise point identification method according to claim 7 or 8, further comprising:
dynamically adjusting the third weight, the fourth weight, and the fifth weight according to the detected weather state; or
dynamically adjusting the third weight, the fourth weight, and the fifth weight according to the detected weather state; wherein the step of dynamically adjusting comprises:
when snow is detected, reducing the second weight and increasing the fourth weight; and/or
when fog is detected, increasing the fifth weight.

10. The noise point identification method according to claim 3, wherein the step S203 comprises:
when the distance is within a preset distance range and the continuity parameter is outside a normal continuity parameter range, judging that the point is the noise point; or
when the distance is within a preset distance range and the continuity parameter is outside a normal continuity parameter range, judging that the point is the noise point; wherein the step of judging whether the point is the noise point or not comprises: calculating the noise point confidence level of the point, and when the noise point confidence level is outside the normal confidence level range, judging that the point is the noise point, and
wherein the calculating the noise point confidence level of the point comprises: when the distance is within the preset distance range, the distance factor being zero, otherwise the distance factor being the first weight; when the continuity parameter is outside a normal continuity parameter range, a continuity factor being zero, otherwise the continuity factor being a third weight; and the noise point confidence level being equal to a sum of the distance factor and the continuity factor, wherein the first weight is greater than the third weight.

11. A laser radar system, comprising:
a laser radar configured to scan a surrounding environment to generate a point cloud;
a denoising unit coupled to the laser radar to receive the point cloud, and configured to execute the noise point identification method according to any one of claims 1-10 to judge whether points in the point cloud are noise points or not; and
an output unit coupled to the denoising unit and configured to output the point cloud.

12. The laser radar system according to claim 11, further comprising a control unit that is coupled to the denoising unit and configured to turn on or disable the denoising unit, wherein when in an on state, the denoising unit filters out the noise points in the point cloud, and the output unit outputs the point cloud after noise filtering; and when in a disabled mode, the denoising unit is disabled, and the output unit outputs the point cloud without noise filtering.

13. The laser radar system according to claim 12, wherein the control unit is configured to turn on the denoising unit when rain, snow, or fog is detected.

14. The laser radar system according to claim 13, wherein the control unit is configured to determine whether rain, snow, or fog is detected based on a number of noise points.

15. The laser radar system according to claim 11, further comprising:
a confidence level calculation unit coupled to the laser radar to receive the point cloud, and configured to calculate noise point confidence levels of a plurality of points in the point cloud; wherein:
the output unit is further coupled to the confidence level calculation unit, and configured to output the noise point confidence levels of the plurality of points in the point cloud.

## Patentansprüche

1. Verfahren zur Identifizierung von Rauschpunkten, das zum Verwenden mit einem Laserradar geeignet ist, umfassend:
Schritt S201: Empfangen einer durch das Laserradar erfassten Punktwolke;
Schritt S202: Erfassen mindestens eines von einem Reflexionsgrad und einem Kontinuitätsparameter eines Punktes in der Punktwolke und einer Entfernung zwischen dem Punkt und dem Laserradar;
Schritt S203: Beurteilen, ob der Punkt ein Rauschpunkt ist oder nicht, mindestens gemäß mindestens einem von dem Reflexionsgrad und dem Kontinuitätsparameter und der Entfernung, wobei der Schritt S203 Folgendes umfasst:
Bestimmen eines Entfernungsfaktors und eines Reflexionsfaktors, wobei:
der Entfernungsfaktor Null oder eine erste Gewichtung und der Reflexionsfaktor Null oder eine zweite Gewichtung ist; wenn die Entfernung innerhalb eines voreingestellten Entfernungsbereichs liegt, ist ein Entfernungsfaktor Null, andernfalls ist der Entfernungsfaktor die erste Gewichtung; wenn der Reflexionsgrad kleiner oder gleich einer voreingestellten Reflexionsschwelle ist, ist ein Reflexionsfaktor Null, andernfalls ist der Reflexionsfaktor die zweite Gewichtung; und
die erste Gewichtung und die zweite Gewichtung gemäß einem detektierten Wetterzustand dynamisch angepasst werden;
Berechnen eines Rauschpunkt-Konfidenzniveaus des Punktes basierend auf einer Summe des Entfernungsfaktors und des Reflexionsfaktors; und
wenn das Rauschpunkt-Konfidenzniveau außerhalb eines normalen Konfidenzniveaubereichs liegt, Beurteilen, dass der Punkt der Rauschpunkt ist.

2. Verfahren zur Identifizierung von Rauschpunkten nach Anspruch 1, wobei der Schritt S202 Folgendes umfasst: Erfassen des Reflexionsgrads des Punkts in der Punktwolke und der Entfernung zwischen dem Punkt und dem Laserradar, und
wobei der Schritt S203 Folgendes umfasst: Beurteilen, ob der Punkt der Rauschpunkt ist oder nicht, gemäß dem Reflexionsgrad und der Entfernung.

3. Verfahren zur Identifizierung von Rauschpunkten nach Anspruch 1, wobei der Schritt S202 Folgendes umfasst: Erfassen des Kontinuitätsparameters des Punkts in der Punktwolke und der Entfernung zwischen dem Punkt und dem Laserradar, und
wobei der Schritt S203 Folgendes umfasst: Beurteilen, ob der Punkt der Rauschpunkt ist oder nicht, gemäß dem Kontinuitätsparameter und der Entfernung.

4. Verfahren zur Identifizierung von Rauschpunkten nach Anspruch 2, wobei der Schritt S203 Folgendes umfasst:
wenn die Entfernung innerhalb eines voreingestellten Entfernungsbereichs liegt und der Reflexionsgrad kleiner oder gleich einer voreingestellten Reflexionsschwelle ist, Beurteilen, dass der Punkt der Rauschpunkt ist; oder
Berechnen des Rauschpunkt-Konfidenzniveaus des Punktes, und wenn das Rauschpunkt-Konfidenzniveau außerhalb des normalen Konfidenzniveaubereichs liegt, Beurteilen, dass der Punkt der Rauschpunkt ist, und
wobei das Berechnen des Rauschpunkt-Konfidenzniveaus des Punktes ferner Folgendes umfasst: wenn die Entfernung innerhalb eines voreingestellten Entfernungsbereichs liegt, ist der Entfernungsfaktor Null, andernfalls ist der Entfernungsfaktor die erste Gewichtung; wenn der Reflexionsgrad kleiner oder gleich einer voreingestellten Reflexionsschwelle ist, ist der Reflexionsfaktor Null, andernfalls ist der Reflexionsfaktor die zweite Gewichtung; und das Rauschpunkt-Konfidenzniveau gleich einer Summe des Entfernungsfaktors und des Reflexionsfaktors ist, wobei die erste Gewichtung größer als die zweite Gewichtung ist.

5. Verfahren zur Identifizierung von Rauschpunkten nach Anspruch 2, wobei der Schritt S202 Folgendes umfasst: Erfassen des Reflexionsgrads und des Kontinuitätsparameters des Punkts und der Entfernung zwischen dem Punkt und dem Laserradar; und wobei der Schritt S203 Folgendes umfasst: Beurteilen, ob der Punkt der Rauschpunkt ist oder nicht, gemäß der Entfernung, dem Reflexionsgrad und dem Kontinuitätsparameter.

6. Verfahren zur Identifizierung von Rauschpunkten nach Anspruch 5, ferner umfassend: Erfassen des Rauschens des Punktes und einer Anzahl von Echoimpulsen des Punktes;
wobei der Schritt S203 Folgendes umfasst: Beurteilen, ob der Punkt der Rauschpunkt ist oder nicht, gemäß der Entfernung, dem Reflexionsgrad, dem Kontinuitätsparameter, dem Rauschen und der Anzahl von Echoimpulsen.

7. Verfahren zur Identifizierung von Rauschpunkten nach Anspruch 6,
wobei das Berechnen des Rauschpunkt-Konfidenzniveaus des Punktes Folgendes umfasst: wenn die Entfernung innerhalb eines voreingestellten Entfernungsbereichs liegt, ist der Entfernungsfaktor Null, andernfalls ist der Entfernungsfaktor die erste Gewichtung; wenn der Reflexionsgrad kleiner oder gleich einer voreingestellten Reflexionsschwelle ist, ist der Reflexionsfaktor Null, andernfalls ist der Reflexionsfaktor die zweite Gewichtung; wenn der Kontinuitätsparameter außerhalb eines normalen Kontinuitätsparameterbereichs liegt, ist ein Kontinuitätsfaktor gleich Null, andernfalls ist der Kontinuitätsfaktor eine dritte Gewichtung; wenn das Rauschen größer als eine Rauschschwelle ist, ist ein Rauschfaktor gleich Null, andernfalls ist der Rauschfaktor eine vierte Gewichtung;
wenn die Anzahl von Echoimpulsen größer ist als eine Impulsanzahlschwelle, ist ein Echoimpulsanzahlfaktor gleich Null, andernfalls ist der Echoimpulsanzahlfaktor eine fünfte Gewichtung; und das Rauschpunkt-Konfidenzniveau gleich einer Summe des Entfernungsfaktors, des Reflexionsfaktors, des Kontinuitätsfaktors, des Rauschfaktors und des Echoimpulsanzahlfaktors ist.

8. Verfahren zur Identifizierung von Rauschpunkten nach Anspruch 7, wobei die erste Gewichtung, die zweite Gewichtung, die dritte Gewichtung, die vierte Gewichtung und die fünfte Gewichtung eine oder mehrere von folgenden Bedingungen erfüllen:
die erste Gewichtung ist gleich einer Summe der zweiten Gewichtung und der dritten Gewichtung;
die zweite Gewichtung ist gleich der dritten Gewichtung;
die erste Gewichtung ist gleich einer Konfidenzniveauschwelle;
eine Summe der vierten Gewichtung und der fünften Gewichtung ist gleich der zweiten Gewichtung und/oder der dritten Gewichtung; und
die erste Gewichtung ist größer als die zweite Gewichtung, die dritte Gewichtung, die vierte Gewichtung und die fünfte Gewichtung.

9. Verfahren zur Identifizierung von Rauschpunkten nach Anspruch 7 oder 8, ferner umfassend:
dynamisches Anpassen der dritten Gewichtung, der vierten Gewichtung und der fünften Gewichtung gemäß dem detektierten Wetterzustand; oder
dynamisches Anpassen der dritten Gewichtung, der vierten Gewichtung und der fünften Gewichtung gemäß dem detektierten Wetterzustand; wobei der Schritt des dynamischen Anpassens Folgendes umfasst:
wenn Schnee detektiert wird, Verringern der zweiten Gewichtung und Erhöhen der vierten Gewichtung; und/oder
wenn Nebel detektiert wird, Erhöhen der fünften Gewichtung.

10. Verfahren zur Identifizierung von Rauschpunkten nach Anspruch 3, wobei der Schritt S203 Folgendes umfasst:
wenn die Entfernung innerhalb eines voreingestellten Entfernungsbereichs liegt und der Kontinuitätsparameter außerhalb eines normalen Kontinuitätsparameterbereichs liegt, Beurteilen, dass der Punkt der Rauschpunkt ist; oder
wenn die Entfernung innerhalb eines voreingestellten Entfernungsbereichs liegt und der Kontinuitätsparameter außerhalb eines normalen Kontinuitätsparameterbereichs liegt, Beurteilen, dass der Punkt der Rauschpunkt ist; wobei der Schritt des Beurteilens, ob der Punkt der Rauschpunkt ist oder nicht, Folgendes umfasst:
Berechnen des Rauschpunkt-Konfidenzniveaus des Punktes, und wenn das Rauschpunkt-Konfidenzniveau außerhalb des normalen Konfidenzniveaubereichs liegt, Beurteilen, dass der Punkt der Rauschpunkt ist, und
wobei das Berechnen des Rauschpunkt-Konfidenzniveaus des Punktes Folgendes umfasst: wenn die Entfernung innerhalb des voreingestellten Entfernungsbereichs liegt, ist der Entfernungsfaktor Null, andernfalls ist der Entfernungsfaktor die erste Gewichtung; wenn der Kontinuitätsparameter außerhalb eines normalen Kontinuitätsparameterbereichs liegt, ist ein Kontinuitätsfaktor gleich Null, andernfalls ist der Kontinuitätsfaktor eine dritte Gewichtung; und das Rauschpunkt-Konfidenzniveau gleich einer Summe aus dem Entfernungsfaktor und dem Kontinuitätsfaktor ist, wobei die erste Gewichtung größer als die dritte Gewichtung ist.

11. Laserradarsystem, umfassend:
ein Laserradar, das konfiguriert ist, um eine Umgebung zu scannen und eine Punktwolke zu erzeugen;
eine Entrauschungseinheit, die mit dem Laserradar gekoppelt ist, um die Punktwolke zu empfangen, und konfiguriert ist, um das Verfahren zur Identifizierung von Rauschpunkten nach einem der Ansprüche 1 bis 10 auszuführen, um zu beurteilen, ob Punkte in der Punktwolke Rauschpunkte sind oder nicht; und
eine Ausgabeeinheit, die mit der Entrauschungseinheit gekoppelt und konfiguriert ist, um die Punktwolke auszugeben.

12. Laserradarsystem nach Anspruch 11, ferner umfassend eine Steuereinheit, die mit der Entrauschungseinheit gekoppelt und konfiguriert ist, um die Entrauschungseinheit ein- oder auszuschalten, wobei in einem eingeschalteten Zustand die Entrauschungseinheit die Rauschpunkte in der Punktwolke herausfiltert und die Ausgabeeinheit die Punktwolke nach dem Rauschfiltern ausgibt; und in einem ausgeschalteten Modus die Entrauschungseinheit ausgeschaltet ist und die Ausgabeeinheit die Punktwolke ohne das Rauschfiltern ausgibt.

13. Laserradarsystem nach Anspruch 12, wobei die Steuereinheit konfiguriert ist, um die Entrauschungseinheit einzuschalten, wenn Regen, Schnee oder Nebel detektiert wird.

14. Laserradarsystem nach Anspruch 13, wobei die Steuereinheit konfiguriert ist, um basierend auf einer Anzahl von Rauschpunkten zu bestimmen, ob Regen, Schnee oder Nebel detektiert wird.

15. Laserradarsystem nach Anspruch 11, ferner umfassend:
eine Konfidenzniveau-Berechnungseinheit, die mit dem Laserradar gekoppelt ist, um die Punktwolke zu empfangen, und konfiguriert ist, um Rauschpunkt-Konfidenzniveaus einer Vielzahl von Punkten in der Punktwolke zu berechnen; wobei:
die Ausgabeeinheit ferner mit der Konfidenzniveau-Berechnungseinheit gekoppelt ist und konfiguriert ist, um die Rauschpunkt-Konfidenzniveaus der Vielzahl von Punkten in der Punktwolke auszugeben.

## Revendications

1. Procédé d'identification de points de bruit conçu pour être utilisé avec un radar laser, comprenant :
étape S201 : la réception d'un nuage de points acquis par le radar laser ;
étape S202 : l'acquisition d'au moins l'un d'une réflectivité et d'un paramètre de continuité d'un point dans le nuage de points, et d'une distance entre le point et le radar laser ;
étape S203 : le fait de juger si le point est un point de bruit ou non, au moins selon au moins l'un de la réflectivité et du paramètre de continuité, et de la distance, l'étape S203 comprend :
la détermination d'un facteur de distance et d'un facteur de réflectivité, dans lequel :
le facteur de distance étant nul ou une première pondération et le facteur de réflectivité étant nul ou une deuxième pondération ; lorsque la distance se situe dans une plage de distances prédéfinie, un facteur de distance étant nul, sinon le facteur de distance étant la première pondération ; lorsque la réflectivité est inférieure ou égale à un seuil de réflectivité prédéfini, un facteur de réflectivité étant nul, sinon le facteur de réflectivité étant la deuxième pondération ; et
la première pondération et la deuxième pondération sont réglées dynamiquement selon l'état météorologique détecté ;
le calcul d'un niveau de confiance de point de bruit sur la base d'une somme du facteur de distance et du facteur de réflectivité ; et
lorsque le niveau de confiance de point de bruit se situe en dehors d'une plage de niveaux de confiance normale, le fait de juger que le point est le point de bruit.

2. Procédé d'identification de points de bruit selon la revendication 1, dans lequel l'étape S202 comprend :
l'acquisition de la réflectivité du point dans le nuage de points et de la distance entre le point et le radar laser, et
dans lequel l'étape S203 comprend : le fait de juger si le point est le point de bruit ou non selon la réflectivité et la distance.

3. Procédé d'identification de points de bruit selon la revendication 1, dans lequel l'étape S202 comprend :
l'acquisition du paramètre de continuité du point dans le nuage de points, et de la distance entre le point et le radar laser, et
dans lequel l'étape S203 comprend : le fait de juger si le point est le point de bruit ou non selon le paramètre de continuité et la distance.

4. Procédé d'identification de points de bruit selon la revendication 2, dans lequel l'étape S203 comprend :
lorsque la distance se situe dans une plage de distances prédéfinie et que la réflectivité est inférieure ou égale à un seuil de réflectivité prédéfini, le fait de juger que le point est le point de bruit ; ou
le calcul du niveau de confiance de point de bruit du point, et, lorsque le niveau de confiance de point de bruit se situe en dehors de la plage de niveaux de confiance normale, le fait de juger que le point est le point de bruit, et
dans lequel le calcul du niveau de confiance de point de bruit du point comprend également : lorsque la distance se situe dans une plage de distances prédéfinie, le facteur de distance étant nul, sinon le facteur de distance étant la première pondération ; lorsque la réflectivité est inférieure ou égale à un seuil de réflectivité prédéfini, le facteur de réflectivité étant nul, sinon le facteur de réflectivité étant la deuxième pondération ; et le niveau de confiance de point de bruit étant égal à une somme du facteur de distance et du facteur de réflectivité, dans lequel la première pondération est supérieure à la deuxième pondération.

5. Procédé d'identification de points de bruit selon la revendication 2, dans lequel l'étape S202 comprend :
l'acquisition de la réflectivité et du paramètre de continuité du point, et de la distance entre le point et le radar laser ; et
dans lequel l'étape S203 comprend : le fait de juger si le point est le point de bruit ou non selon la distance, la réflectivité et le paramètre de continuité.

6. Procédé d'identification de points de bruit selon la revendication 5, comprenant également : l'acquisition du bruit du point et d'un nombre d'impulsions d'écho du point ;
dans lequel l'étape S203 comprend : le fait de juger si le point est le point de bruit ou non selon la distance, la réflectivité, le paramètre de continuité, le bruit et le nombre d'impulsions d'écho.

7. Procédé d'identification de points de bruit selon la revendication 6,
dans lequel le calcul du niveau de confiance de point de bruit du point comprend : lorsque la distance se situe dans une plage de distances prédéfinie, le facteur de distance étant nul, sinon le facteur de distance étant la première pondération ; lorsque la réflectivité est inférieure ou égale à un seuil de réflectivité prédéfini, le facteur de réflectivité étant nul, sinon le facteur de réflectivité étant la deuxième pondération ; lorsque le paramètre de continuité se situe en dehors d'une plage de paramètres de continuité normale, un facteur de continuité étant nul, sinon le facteur de continuité étant une troisième pondération ; lorsque le bruit est supérieur à un seuil de bruit, un facteur de bruit étant nul, sinon le facteur de bruit étant une quatrième pondération ; lorsque le nombre d'impulsions d'écho est supérieur à un seuil de nombre d'impulsions, un facteur de nombre d'impulsions d'écho étant nul, sinon le facteur de nombre d'impulsions d'écho une cinquième pondération ; et le niveau de confiance de point de bruit étant égal à une somme du facteur de distance, du facteur de réflectivité, du facteur de continuité, du facteur de bruit et du facteur de nombre d'impulsions d'écho.

8. Procédé d'identification de points de bruit selon la revendication 7, dans lequel la première pondération, la deuxième pondération, la troisième pondération, la quatrième pondération et la cinquième pondération satisfont à une ou plusieurs des conditions suivantes :
la première pondération est égale à une somme de la deuxième pondération et de la troisième pondération ;
la deuxième pondération est égale à la troisième pondération ;
la première pondération est égale à un seuil de niveau de confiance ;
une somme de la quatrième pondération et de la cinquième pondération est égale à la deuxième pondération et/ou à la troisième pondération ; et
la première pondération est supérieure à la deuxième pondération, à la troisième pondération, à la quatrième pondération et à la cinquième pondération.

9. Procédé d'identification de points de bruit selon la revendication 7 ou 8, comprenant également :
le réglage dynamique de la troisième pondération, de la quatrième pondération et de la cinquième pondération selon l'état météorologique détecté ; ou
le réglage dynamique de la troisième pondération, de la quatrième pondération et de la cinquième pondération selon l'état météorologique détecté ; dans lequel l'étape de réglage dynamique comprend :
en cas de détection de neige, la réduction de la deuxième pondération et l'augmentation de la quatrième pondération ; et/ou
en cas de détection de brouillard, l'augmentation de la cinquième pondération.

10. Procédé d'identification de points de bruit selon la revendication 3, dans lequel l'étape S203 comprend :
lorsque la distance se situe dans une plage de distances prédéfinie et que le paramètre de continuité se situe en dehors d'une plage de paramètres de continuité normale, le fait de juger que le point est le point de bruit ; ou
lorsque la distance se situe dans une plage de distances prédéfinie et que le paramètre de continuité se situe en dehors d'une plage de paramètres de continuité normale, le fait de juger que le point est le point de bruit ; dans lequel l'étape consistant à juger si le point est le point de bruit ou non comprend : le calcul du niveau de confiance de point de bruit du point, et, lorsque le niveau de confiance de point de bruit se situe en dehors d'une plage de niveaux de confiance normale, le fait de juger que le point est le point de bruit, et
dans lequel le calcul du niveau de confiance de point de bruit du point comprend : lorsque la distance se situe dans la plage de distances prédéfinie, le facteur de distance étant nul, sinon le facteur de distance étant la première pondération ; lorsque le paramètre de continuité se situe en dehors d'une plage de paramètres de continuité normale, un facteur de continuité étant nul, sinon le facteur de continuité étant une troisième pondération ; et le niveau de confiance de point de bruit étant égal à une somme du facteur de distance et du facteur de continuité, dans lequel la première pondération est supérieure à la troisième pondération.

11. Système radar laser, comprenant :
un radar laser configuré pour scanner l'environnement environnant afin de générer un nuage de points ;
une unité de débruitage couplée au radar laser pour recevoir le nuage de points, et configurée pour exécuter le procédé d'identification de points de bruit selon l'une quelconque des revendications 1 à 10 afin de juger si des points dans le nuage de points sont des points de bruit ou non ; et
une unité de sortie couplée à l'unité de débruitage et configurée pour produire le nuage de points.

12. Système radar laser selon la revendication 11 comprenant également une unité de commande qui est couplée à l'unité de débruitage et configurée pour activer ou désactiver l'unité de débruitage, dans lequel lorsqu'elle est dans un état activé, l'unité de débruitage filtre les points de bruit dans le nuage de points, et l'unité de sortie produit le nuage de points après filtrage du bruit ; et lorsqu'elle est dans un mode désactivé, l'unité de débruitage est désactivée, et l'unité de sortie produit le nuage de points sans filtrage du bruit.

13. Système radar laser selon la revendication 12, dans lequel l'unité de commande est configurée pour activer l'unité de débruitage lorsque de la pluie, de la neige ou du brouillard est détecté.

14. Système radar laser selon la revendication 13, dans lequel l'unité de commande est configurée pour déterminer si de la pluie, de la neige ou du brouillard est détecté sur la base du nombre de points de bruit.

15. Système radar laser selon la revendication 11, comprenant également :
une unité de calcul de niveau de confiance couplée au radar laser pour recevoir le nuage de points, et configurée pour calculer des niveaux de confiance de point de bruit d'une pluralité de points dans le nuage de points ; dans lequel :
l'unité de sortie est également couplée à l'unité de calcul de niveau de confiance, et configurée pour produire les niveaux de confiance de point de bruit de la pluralité de points dans le nuage de points.
